# EUROPÄISCHE PATENTSCHRIFT

(11) **EP 1 952 875 B1**
(45) Veröffentlichungstag und Bekanntmachung des Hinweises auf die Patenterteilung: **29.09.2010**
(21) Anmeldenummer: 07100262.0
(22) Anmeldetag: 09.01.2007
(51) Int. Cl.: B01D 53/22, H01M 8/06, H01M 8/10

(54) **CO2-Separator für eine Direktmethanol-Brennstoffzelle (DMFC)**
CO2 separator for a direct methanol fuel cell (DMFC)
Séparateur de CO2 pour pile à combustible de méthanol direct (DMFC)

(43) Veröffentlichungstag der Anmeldung: 06.08.2008
(73) Patentinhaber: Samsung SDI Co., Ltd., Suwon-si Gyeonggi-do (KR)
(72) Erfinder: Bronold, Matthias, 12209 Berlin (DE); Baumann, Thorsten, 12161 Berlin (DE); Gruner, Marco, 39175 Biederitz (DE); Rosenfeld, Immanuel, 10369 Berlin (DE)
(74) Vertreter: Hengelhaupt, Jürgen

(56) Entgegenhaltungen:
- WO-A-2006/017557
- WO-A-2006/105771
- GB-A- 2 287 460
- US-A- 5 618 332
- US-A- 5 871 646
- US-A- 6 152 986
- US-A1- 2004 146 705
- US-A1- 2005 028 670
- US-A1- 2007 003 809

## Beschreibung

Die Erfindung betrifft einen CO₂-Separator und eine Direktmethanol-Brennstoffzelle (DMFC).

### Technologischer Hintergrund und Stand der Technik

Eine Brennstoffzelle ist eine galvanische Zelle, die die chemische Reaktionsenergie eines kontinuierlich zugeführten Brennstoffes und eines Oxidationsmittels in elektrische Energie umwandelt. Eine Brennstoffzelle besteht in der Regel aus zwei Elektroden, die durch eine Membran oder einen Elektrolyten voneinander getrennt sind. Die Anode wird mit dem Brennstoff, zum Beispiel Wasserstoff, Methan oder Methanol, umspült und der Brennstoff wird dort oxidiert. Die Kathode wird mit dem Oxidationsmittel umspült, zum Beispiel Sauerstoff, Wasserstoffperoxid oder Kaliumthiocyanat, das an der Elektrode reduziert wird. Die zur Realisation der einzelnen Komponenten verwendeten Materialien sind je nach Brennstoffzellentyp unterschiedlich zu wählen.

Die Direktmethanol-Brennstoffzelle (DMFC; direct methanol fuell cell) ist eine Niedrigtemperatur-Brennstoffzelle, die schon bei Temperaturen im Bereich von ca. 60 - 120°C arbeitet. Als Elektrolyt verwendet dieser Zellentyp eine Polymermembran. Methanol (CH₃OH) wird ohne vorherige Reformierung zusammen mit Wasser direkt der Anode zugeführt und dort oxidiert. An der Anode entsteht als Abgas Kohlendioxid (CO₂). Der Kathode als Oxidationsmittel zugeführte Luftsauerstoff reagiert mit H⁺-Ionen und Elektroden zu Wasser. Der Vorteil der DMFC liegt in der Verwendung eines flüssigen, sehr leicht speicherbaren und überaus billigen Energieträgers, der zum Beispiel in Kunststoffpatronen verbreitet werden kann. Zudem existiert eine weit verzweigte Infrastruktur für Methanol bereits in vielen Bereichen, zum Beispiel durch die Verwendung als Frostschutzzusatz im Scheibenwischerwasser für Kraftfahrzeuge. Dieser Brennstoffzellentyp kann - je nach Auslegung - Leistungen im Bereich von einigen mW bis einigen 100 KW erbringen. DMFCs eignen sich insbesondere für den portablen Einsatz in elektronischen Geräten als Ersatz und Ergänzung zu herkömmlichen Akkumulatoren. Typische Einsatzgebiete liegen in der Telekommunikation und der Energieversorgung von Notebooks.

Die Oxidation des Methanols am Katalysator der Anode erfolgt stufenweise, wobei mehrere Reaktionswege mit unterschiedlichen Zwischenprodukten in der Diskussion stehen. Um die Effizienz der Brennstoffzelle hochzuhalten, ist es erforderlich die Reaktionsprodukte rasch aus der Umgebung der Elektrode zu entfernen. Aufgrund der herrschenden Temperaturen und des zu Grunde liegenden Chemismus entsteht ein Flüssig/Gas-Gemisch aus CO₂, Wasser, Wasserdampf und nicht umgesetzten Methanol. Aus diesem Flüssig/Gas-Gemisch sollte das Wasser und das Methanol zurück gewonnen werden, um die Autarkie des Systems möglichst lange aufrecht zu erhalten. Ferner ist CO₂ aus dem Gleichgewicht zu entfernen. Dies geschieht mit Hilfe eines CO₂-Separators.

Der CO₂-Separator dient demnach vornämlich dem Wassermanagement und der Entfernung von CO₂ aus dem Gleichgewicht. Er wird zumeist als separate Einrichtung verwirklicht, die mit der eigentlichen Brennstoffzelle über eine für das Flüssig/Gas-Gemisch gängige Zuleitung verbunden ist. Dieser räumliche Abstand bedingt auch einen Temperaturgradienten und aus dem sich langsam abkühlenden Flüssig/Gas-Gemisch kondensiert Wasser aus. Herkömmliche CO₂-Separatoren trennen das Phasengemisches aus flüssigen und gas- beziehungsweise dampfförmigen Komponenten, wobei die gas- beziehungsweise dampfförmigen Komponenten an die Umgebung abgegeben werden. Auch die vorliegende Erfindung setzt hier an.

Bekannt ist, den CO₂-Separator zur Trennung des Flüssig/Gas-Gemisches mit einer porösen Membran auszustatten. Die poröse Membran ist mit ihrer Innenseite dem Flüssig/Gas-Gemisch zugewandt und ihre Außenseite steht mit der Umgebung in Kontakt. Weiterhin sind derartige Membranen in der Regel mit hydrophoben Materialien beschichtet oder bestehen aus diesen. Von der Innenseite der Membran erstrecken sich Diffusionskanäle zur Außenseite, die so dimensioniert sind, dass an der Innenseite befindliches (flüssiges) Wasser nicht austreten, jedoch CO₂ nach Außen diffundieren kann. US 2007/0003809 A1 beschreibt einen solchen Separator.

Beim Stand der Technik tritt das Problem auf, dass die Temperaturen des Flüssig/Gas-Gemisches beim Eintritt in den CO₂-Separator üblicherweise noch im Bereich von 60 - 80°C liegen und ein entsprechend hoher Wasserdampfanteil in der Gasphase des Flüssig/Gas-Gemisches gegeben ist. Während des Durchdringens der Membran kühlen die gasförmigen Komponenten des Flüssig/Gas-Gemisches jedoch weiter ab und in der Folge kondensiert Wasser aus. Dies führt zu einer Blockade der Diffusionskanäle/-poren, so dass der Durchsatz von CO₂ durch die Membran vermindert ist oder schlimmsten Falls völlig verhindert wird.

### Zusammenfassung der Erfindung

Der Erfindung liegt die Aufgabe zu Grunde, die geschilderten Nachteile des Standes der Technik zu überwinden. Dies wird mit Hilfe des erfindungsgemäßen CO₂-Separators für eine Direktmethanol-Brennstoffzelle (DMFC) mit einer ein- oder mehrschichtigen Membran gelöst. Der erfindungsgemäße CO₂-Separator zeichnet sich dadurch aus, dass
(i) die Membran eine Vielzahl von Diffusionskanäle aufweist, die sich von einer Innenseite der Membran bis auf die gegenüberliegende Außenseite der Membran erstrecken, wobei ein mittlerer Durchmesser der Diffusionskanäle an der Außenseite mindestens um einen Faktor 3 größer ist als ein mittlerer Durchmesser der Diffusionskanäle an der Innenseite der Membran; und
(ii) eine Oberfläche der Innen- und Außenseite der Membran sowie eine innere Oberfläche der Diffusionskanäle der Membran hydrophob ist.

Mit Hilfe des erfindungsgemäßen CO₂-Separators ist auch bei Flüssig/Gas-Phasengemischen mit hohem Wasserdampfanteil (so etwa gegeben bei Temperaturen im Bereich von 60 - 80°C) noch eine hinreichende Permeabilität der Membran über die Zeit gegeben.

Der Erfindung liegt zunächst die Erkenntnis zu Grunde, dass sich die Diffusionskanäle in der Membran ausgehend von der Innenseite der Membran hin zur Außenseite der Membran aufweiten müssen. Hierdurch kann erreicht werden, dass im Inneren der Membran kondensiertes Wasser zur Außenseite gedrückt wird. Ein Verhältnis der Durchmesser der Diffusionskanäle an der Innen- bzw. Außenseite wird durch den genannten Faktor bestimmt. Dieser ist unter anderem abhängig von den Betriebsdrücken, Temperaturen und Gemischzusammensetzungen, die in einem spezifischen Brennstoffzellensystem herrschen.

Der Durchmesser der Diffusionskanäle wird an der Außen- bzw. Innenseite der Membran erfasst, wobei sich ein für die Bestimmung des Wertes oberflächennaher Bereich der Membran in Abhängigkeit der Rauhigkeit der Membran bis einige µm in das Innere der Membran erstrecken kann. Die von Außen sichtbaren Poren der Diffusionskanäle können zum Beispiel mit Hilfe optischer Verfahren vermessen werden. Da die Porenöffnungen in der Regel sphärisch sind, kann näherungsweise ein Durchmesser der einzelnen Porenöffnungen ermittelt werden. Durch statistische Mittelung (Mittelwertbildung) wird ein arithmetisches Mittel des Porendurchmessers gebildet und als mittlerer Durchmesser der Diffusionskanäle an der Innenseite bzw. Außenseite der Membran zur Bestimmung des Faktors herangezogen. Vorzugsweise ist der mittlere Durchmesser der Diffusionskanäle an der Außenseite um einen Faktor von 3 bis 300 größer als der mittlere Durchmesser der Diffusionskanäle an der Innenseite der Membran.

Weiterhin sind erfindungsgemäß alle mit dem Flüssig/Gas-Gemisch in Berührung stehenden Bereiche der Membran hydrophob ausgelegt, zeigen also einen Kontaktwinkel eines aufgesetzten Wassertropfens von 90° oder mehr. In der Folge ist die Oberflächenenergie der Membran soweit herabgesetzt, dass Wasser mit sich selbst stärkere Wechselwirkung eingeht als mit der hydrophoben Oberfläche der Membran, die nur den Aufbau von Van-der-Waals-Bindungen erlaubt. Vorzugsweise liegt die Hydrophobizität der Membran bei einem Kontaktwinkel des Wassers von mehr als 130°.

Als Kontaktwinkel wird der Winkel bezeichnet, den ein Flüssigkeitstropfen auf der Oberfläche eines Feststoffes bildet. Die Größe des Kontaktwinkels zwischen der Flüssigkeit und dem Feststoff hängt von der Wechselwirkung zwischen den Stoffen an der Berührungsfläche ab. Je geringer diese Wechselwirkung ist, desto größer wird der Kontaktwinkel. Zur Kontaktwinkelbestimmung kann insbesondere die Methode des liegenden Tropfens unter zur Hilfenahme der Youngschen Gleichung herangezogen werden.

Nach einer bevorzugten Ausführungsform der Erfindung ist die Außenseite der Membran hydrophober als ihre Innenseite. Hierdurch wird die Kontaktfläche der auf der Außenseite der Membran kondensierenden Tropfen mit der Oberfläche minimiert, sodass die durch die Tropfen blockierte Oberfläche der Membran minimiert wird. Besonders bevorzugt beträgt der Kontaktwinkel an der Innenseite der Membran mindestens 130° und der Kontaktwinkel an der Außenseite der Membran mindestens 135°. Vorzugsweise ist dabei der Kontaktwinkel an der Außenseite um 1° bis 10° größer als der Kontaktwinkel an der Innenseite der Membran.

Nach einer weiteren bevorzugten Ausführungsform, die auch im Zusammenhang mit der zuvor genannten bevorzugten Ausführungsform umsetzbar ist, besteht die Membran aus zwei Schichten mit jeweils einem unterschiedlichen mittleren Durchmesser der Diffusionskanäle. Sinnfälligerweise ist die später die Innenseite der Membran definierende Schicht derart beschaffen, dass ihre Diffusionskanäle einen geringeren mittleren Durchmesser als die Diffusionskanäle der zweiten Schicht aufweisen. Insbesondere kann diese erste, an der Innenseite der Membran liegende Schicht eine größere Hydrophobizität als die zweite, die Außenseite definierende Schicht aufweisen. Eine derartige zweischichtige Membran lässt sich besonders einfach technisch realisieren, zum Beispiel durch Laminieren von Membranen unterschiedlicher Porosität und Hydrophobizität. Denkbar sind natürlich auch Membranen aus mehr als zwei Schichten, deren Herstellung allerdings aufwendiger ist.

Eine weitere bevorzugte Ausführungsform des CO₂-Separators, die sich auch mit den zuvor genannten bevorzugten Ausführungsformen kombinieren lässt, sieht vor, dass die Membran in einem Rahmen eingespannt ist, dessen Oberfläche ebenfalls hydrophob ist. Nach weniger bevorzugten Alternativen kann die Membran natürlich auch auf netzartige oder gitterartige Trägerstrukturen aufgezogen werden. Die Aufnahme in einem Rahmen lässt sich jedoch herstellungstechnisch besonders einfach umsetzen und hat zudem den Vorteil, dass keine weiteren Stützelemente über die gesamte aktive Fläche der Membran vorhanden sind, die die Permeabilität mindern. Da der Rahmen auf der einen Seite auch mit der Umgebung in Kontakt steht, dürfte er in der Regel kühler sein als das anliegende Flüssig/Gas-Gemisch, so dass es zur Kondensation von Wasser an den Innenseiten des Rahmens kommt. Mit der Wahl eines hydrophoben Materials für den Rahmen kann eine Benetzung der Randbereiche der Membran mit dem an den Rahmen kondensierenden Wasser minimiert werden, so dass die Permeabilität der Membran auch in diesen Randbereichen hoch bleibt. Vorzugsweise wird der Rahmen aus einem fluorhaltigen polymeren Werkstoff gefertigt, zum Beispiel Polytetrafluorethylen (PTFE).

Nach einer weiteren bevorzugten Variante besteht der Rahmen aus einem porösen hydrophilen Material, das ähnlich einem Schwamm wirkt. Hierdurch kann erreicht werden, dass gegebenenfalls kondensiertes Wasser auch durch den Rahmen nach Außen diffundieren kann, so dass die Gefahr der Benetzung der Membranen weiter gemindert ist und auch der Rahmen selbst die Separation des Flüssig/Gas-Gemisches unterstützt. Schließlich kann nach dieser Ausführungsform zwischen der Membran und dem Rahmen eine Beschichtung oder eine Zwischenschicht angeordnet sein, die aus einem hydrophoben Material besteht. Auch durch diese Maßnahme soll ein Benetzen der Membran in den Randbereichen zum Rahmen verhindert werden.

### Kurzbeschreibung der Zeichnungen

Nachfolgend wird die Erfindung anhand von Ausführungsbeispielen und den dazugehörigen Zeichnungen näher erläutert. Es zeigen:
- Figur 1: eine DMFC im schematischen Aufbau;
- Figur 2: einen schematischen Querschnitt durch eine einschichtige Membran des CO₂-Separators der DMFC;
- Figur 3: einen schematischen Querschnitt durch eine zweischichtige Membran des CO₂-Separators der DMFC;
- Figur 4: eine schematische Schnittdarstellung durch einen CO₂-Separator mit einer auf einen Rahmen aufgespannten Membran nach einer ersten Variante; und
- Figur 5: eine schematische Schnittdarstellung durch einen CO₂-Separator mit einer auf einen Rahmen aufgespannten Membran nach einer zweiten Variante.

### Detaillierte Beschreibung der Erfindung

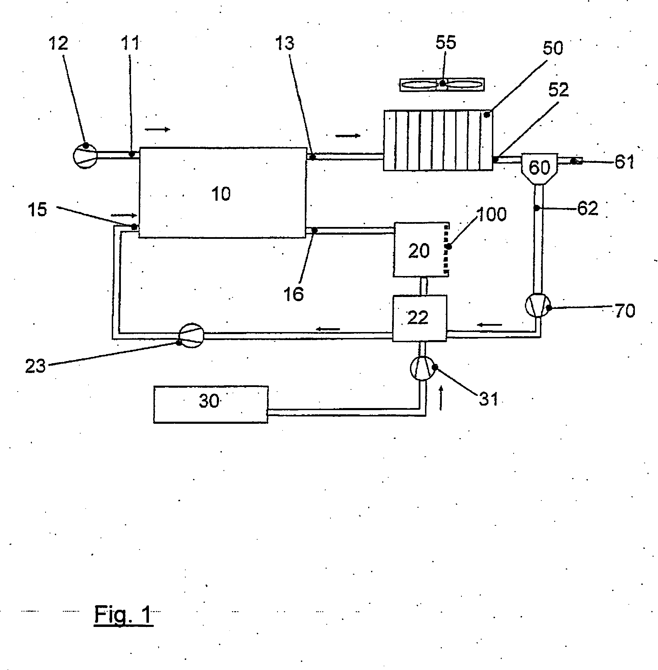

Figur 1 dient zur Illustration des Aufbaus einer DMFC. Im Brennstoffzellenstapel 10 findet - der für die Zwecke der Erfindung nicht näher zu erläuternde - elektrochemische Vorgang statt, dessen Reaktionsprodukt anodenseitig ein CO₂ und wasserhaltiges Flüssig/Gas-Gemisch ist.

Über eine kathodenseitige Einlassöffnung 11 wird mit Hilfe einer Pumpe 12 dem Stapel 10 Luft zugeführt. Aus der kathodenseitigen Ausgangsöffnung 13 des Stapels 10 kann die eingeleitete Luft wieder entweichen und wird mittels eines Wärmeaustauschers 50 mit zugeordnetem Belüfter 55 abgekühlt. Die abgekühlte Luft beziehungsweise aus dieser auskondensierte Flüssigkeit verlassen den Wärmeaustauscher 50 durch eine Ausgangsöffnung 52 und werden einem Wasserabscheider 60 zugeführt. Dieser steht über entsprechende Leitungen mit einem Auslassventil 61 und über eine mit einer Pumpe 70 verbundene Leitung 62 mit einem Mischer 22 in Verbindung.

Anodenseitig wird mittels einer Pumpe 23 über eine Einlassöffnung 15 das sich im Mischer 22 befindliche Gemisch dem Brennstoffzellenstapel 10 zugeführt.

Weiterhin wird über einen Brennstofftank 30 und ein entsprechendes Ventil 31 Brennstoff, also Methanol, dem Mischer 22 zugeführt.

Der Brennstoffzellenstapel 10 hat schließlich eine anodenseitige Auslassöffnung 16, die über eine Leitung in einen CO₂-Separator 20 mündet. Der CO₂-Separator 20 weist eine Membran 100 auf, die zur Trennung des Flüssig/Gas-Gemisches dient und erfindungsgemäß modifiziert wurde.

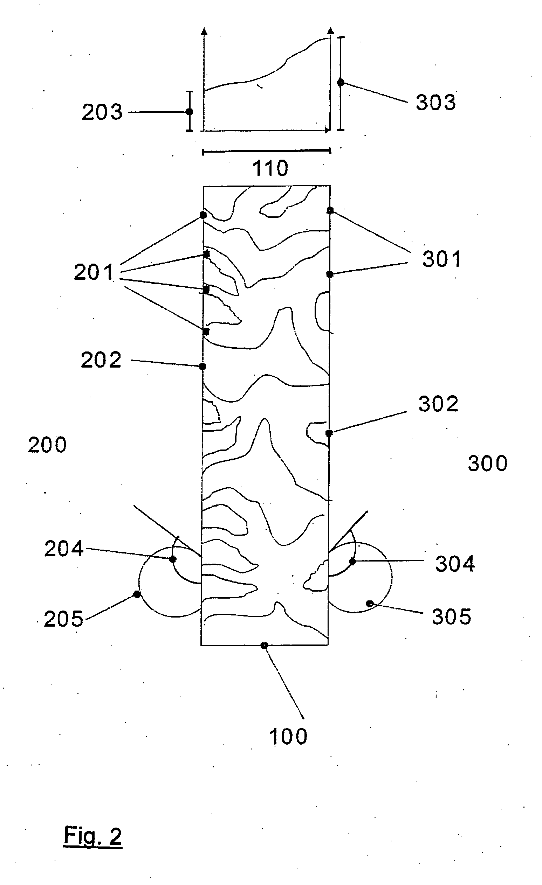

Der Figur 2 ist ein vergrößerter Ausschnitt durch einen Bereich der erfindungsgemäßen Membran 100 nach einer ersten Variante zu entnehmen. Die linke Seite der Abbildung stellt dabei eine nach Innen gerichtete Oberfläche (also dem Flüssig/Gas-Gemisch zugewandte Seite) der Membran 100 dar und wird im Weiteren als Innenseite 200 bezeichnet. Entsprechend wird die rechte Seite, die mit der Umgebung in Kontakt steht, als Außenseite 300 der Membrane 100 bezeichnet.

Auf der Innenseite 200 der Membran lassen sich eine Vielzahl von Poren 201 identifizieren, die über Diffusionskanäle 120 mit entsprechenden Poren 301 auf der Außenseite 300 der Membran 100 in Verbindung stehen. Die mittleren Durchmesser der Poren 201 und damit der Diffusionskanäle 120 an der Innenseite 200 sind etwa um den Faktor 3 kleiner als die mittleren Durchmesser der Diffusionskanäle 120 im Bereich der Poren 301 der Außenseite 300.

Eine Oberfläche der Membran 100 sowohl auf der Innen- und Außenseite 200, 300 als auch im Inneren der Diffusionskanäle 120 ist hydrophob.

Durch die Kombination der sich von Innen nach Außen aufweitenden Poren mit der hydrophoben Oberfläche der Diffusionskanäle (Poren) wird erreicht, dass es für in der Membran auf Grund eines negativen Temperaturgradienten kondensierende Wassertropfen eine Triebkraft für den Transport nach Außen gibt, da mit zunehmender Porengröße die abstoßende Wechselwirkung der Wassertropfen mit der hydrophoben Oberfläche der Diffusionskanäle (Poren) kleiner wird. Diese nach Außen wirkende Triebkraft unterstützt den nach Außen gerichteten Gasfluss durch die Diffusionskanäle. Dadurch wird verhindert, dass kondensierende Wassertropfen innerhalb der Membran verbleiben, die Diffusionskanäle verstopfen und so zu einer abnehmenden Gasseparationswirkung führen.

In einer Ausführungsform ist der Kontaktwinkel 204 an der Innenseite 200 der Membran 100 größer als 130°, um eine ausreichende Rückhaltung der Flüssigkeit zu gewährleisten, und der Kontaktwinkel 304 an der Außenseite 300 der Membran 100 größer als 135°. Durch den sehr großen Kontaktwinkel 304 an der Außenseite 300 wird erreicht, dass sich kondensierende Wassertropfen 305 an der Außenseite nahezu zu einer idealen Kugelform zusammen ziehen und dadurch die Kontaktflächen mit der Außenseite 300 minimiert wird. Dadurch wird die Anzahl der durch die Wassertropfen blockierten Diffusionskanäle (Poren) minimiert und die Oberfläche der Wassertropfen für eine Wiederverdunstung maximiert.

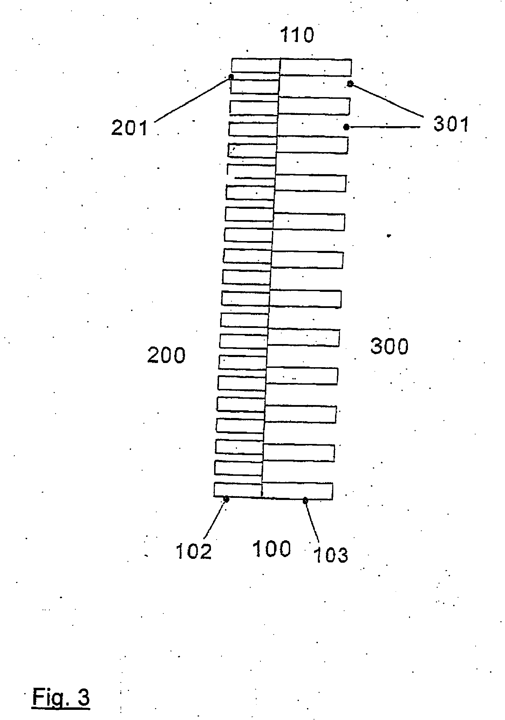

Figur 3 ist eine zweite Ausführungsform der erfindungsgemäßen Membran 100 zu entnehmen. Gemäß dieser zweiten Ausführungsform besteht die Membran 100 aus einer ersten Schicht 102 und einer zweiten Schicht 103, die miteinander verbunden sind.

Die erste Schicht 102 besteht gemäß dem Stand der Technik aus einer gereckten PTFE Schicht mit einem Porendurchmesser zwischen 0,2 und 2 µm. Die zweite Schicht 103 kann aus einem Gewebe oder einem Filz aus PTFE, Polyethylen oder Polyester bestehen. Beide Schichten werden beispielsweise durch einen thermischen Prozess miteinander verbunden.

Der gemäß der vorliegenden Erfindung beschriebene Effekt ist dann gewährleistet, wenn der Porendurchmesser der zweiten Schicht 103 um mindestens den Faktor 3 größer als der Porendurchmesser der ersten Schicht beträgt. Vorzugsweise beträgt dabei der Kontaktwinkel an beiden Schichten mindestens 130°. Bevorzugt ist die zweite Schicht so gefertigt, dass der Kontaktwinkel an der äußeren Oberfläche 300 mindestens 135° beträgt.

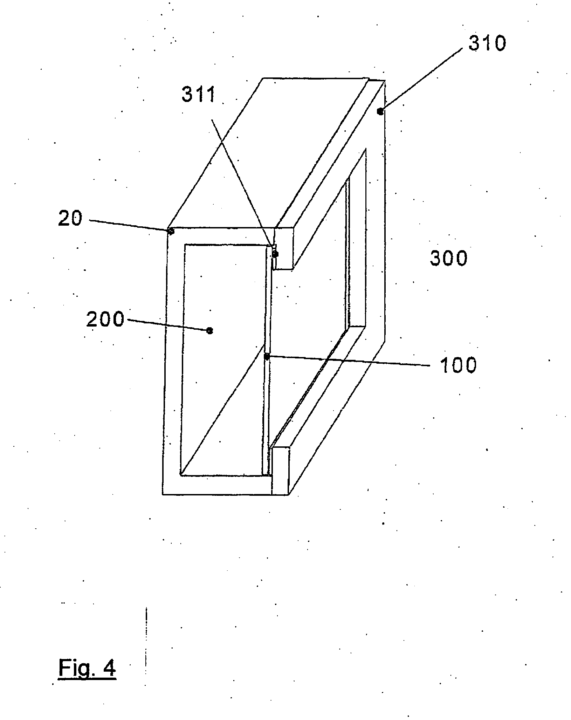

Figur 4 ist eine weitere Ausführungsform der Erfindung zu entnehmen, bei der die Membran 100 mit Hilfe eines Rahmens 310 aufgespannt wird und am CO₂-Separator 20 befestigt wird. Der Rahmen 310 besteht optional aus Polytetrafluorethylen (PTFE).

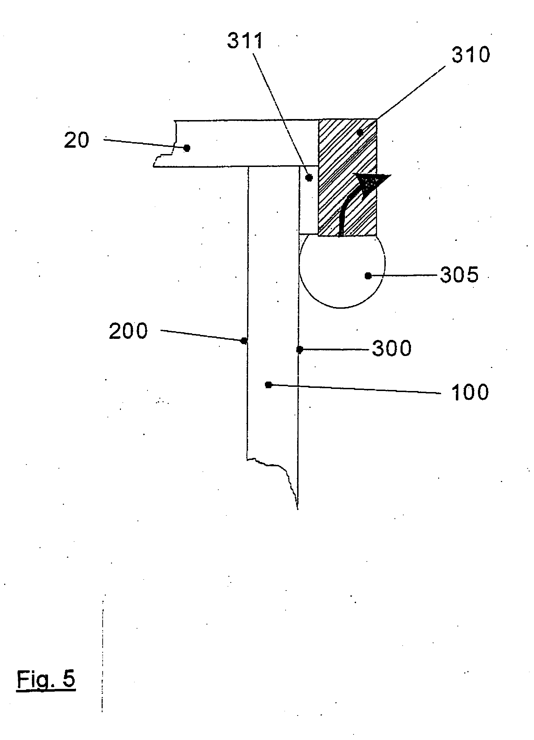

In einer weiteren bevorzugten Ausführungsform ist der Rahmen (310) aus einem porösen hydrophilen Material ausgeführt. Die Wirkung dieser Ausführungsform ist in Fig. 5 dargestellt. Da der Rahmen 310 mit der Umgebung bzw. dem Inneren des Brennstoffzellensystems in Kontakt steht, wird er eine niedrigere Temperatur annehmen, als das durch die Membran entweichende Gasgemisch aus CO₂ und Wasserdampf. Dadurch wird insbesondere im Rahmenbereich eine Abkühlung des Gasgemisches verbunden mit einer Kondensation von Wasser erfolgen, d.h. in diesem Bereich werden die Poren der Membran 100 verstärkt durch Wassertropfen 305 blockiert.

Durch eine schwammartige Wirkung des hydrophilen porösen Rahmens 310 werden diese Wassertropfen 305 von der Außenseite 300 der Membran 100 abgesaugt (durch den Pfeil angedeutet) und können durch die große Oberfläche des Rahmens 310 verdunsten.

Um eine Wiederbenetzung der Membran 100 an der Grenzschicht zum Rahmen 310 zu verhindern, kann eine hydrophobe Zwischenschicht oder Beschichtung 311, beispielsweise bestehend aus PTFE, zwischen dem Rahmen 310 und der Membran 100 angeordnet sein.

Der CO₂-Separator 20 kann gegebenenfalls derart montiert werden, dass ein Luftstrom über die Membran 100 beziehungsweise über den Rahmen 310 führbar ist, der das Abführen von Wasser und CO₂ erleichtert.

## Patentansprüche

1. CO₂-Separator (20) für eine Direktmethanol-Brennstoffzelle (DMFC) mit einer ein- oder mehrschichtigen Membran (100), wobei
(i) die Membran (100) eine Vielzahl von Diffusionskanäle (120) aufweist, die sich von einer Innenseite (200) der Membran (100) bis auf die gegenüberliegende Außenseite (300) der Membran (100) erstrecken, wobei ein mittlerer Durchmesser der Diffusionskanäle (120) an der Außenseite (300) mindestens um einen Faktor 3 größer ist als ein mittlerer Durchmesser der Diffusionskanäle (120) an der Innenseite (200) der Membran (100); und
(ii) die Oberflächen der Innen- und Außenseite (200, 300) der Membran (100) sowie eine innere Oberfläche der Diffusionskanäle (120) der Membran (100) hydrophob sind, so dass ein Kontaktwinkel eines aufgesetzten Wassertropfens 90° oder mehr beträgt.

2. CO₂-Separator nach Anspruch 1, bei dem der Kontaktwinkel an der Innenseite (200) der Membran (100) mindestens 130° und der Kontaktwinkel an der Außenseite (300) der Membran (100) mindestens 135° beträgt.

3. CO₂-Separator nach Anspruch 2, bei dem der Kontaktwinkel (304) an der Außenseite (300) um 1° bis 10° größer ist als der Kontaktwinkel (204) an der Innenseite (200) der Membran (100).

4. CO₂-Separator nach einem der Ansprüche 1 bis 3, bei dem die Membran (100) aus zwei Schichten mit einem unterschiedlichen mittleren Durchmesser der Diffusionskanäle (120) besteht.

5. CO₂-Separator nach einem der Ansprüche 1 bis 4, bei dem die Membran (100) in einen Rahmen (310) eingespannt ist, dessen Oberfläche hydrophob ist.

6. CO₂-Separator nach einem der Ansprüche 1 bis 4, bei dem der Rahmen (310) aus einem porösen hydrophilen Material besteht.

7. CO₂-Separator nach Anspruch 6, bei dem zwischen der Membran (100) und dem Rahmen (310) eine Beschichtung oder eine Zwischenschicht (311) angeordnet ist, die aus einem hydrophoben Material besteht.

## Claims

1. CO₂ separator (20) for a direct methanol fuel cell (DMFC) having a single- or multilayered membrane (100), wherein
(i) the membrane (100) has a plurality of diffusion channels (120) extending from an inner side (200) of the membrane (100) to the opposite outer side (300) of the membrane (100), wherein a mean diameter of the diffusion channels (120) at the outer side (300) is larger than a mean diameter of the diffusion channels (120) at the inner side (200) of the membrane (100) at least by a factor of 3; and
(ii) the surfaces of the inner and outer side (200, 300) of the membrane (100) and an inner surface of the diffusion channels (120) of the membrane (100) are hydrophobic, so that a contact angle of a deposited drop of water is 90° or more.

2. CO₂ separator of claim 1, wherein the contact angle at the inner side (200) of the membrane (100) is at least 130° and the contact angle at the outer side (300) of the membrane (100) is at least 135°.

3. CO₂ separator of claim 2, wherein the contact angle (304) at the outer side (300) is larger than the contact angle (204) at the inner side (200) of the membrane (100) by 1° to 10°.

4. CO₂ separator of one of the claims 1 to 3, wherein the membrane (100) consists of two layers having a different mean diameter of the diffusion channels (120).

5. CO₂ separator of one of the claims 1 to 4, wherein the membrane (100) is fixed into a frame (310), the surface of which is hydrophobic.

6. CO₂ separator of one of the claims 1 to 4, wherein the frame (310) consists of a porous hydrophilic material.

7. CO₂ separator of claim 6, wherein a coating or an intermediate layer (311) consisting of hydrophobic material is disposed between the membrane (100) and the frame (310).

## Revendications

1. Séparateur de CO₂ (20) pour une pile à combustible à méthanol direct (DMFC) d'une membrane à couche unique ou multicouches (100),
(i) la membrane (100) présentant une pluralité de canaux de diffusion (120) qui s'étendent depuis un côté interne (200) de la membrane (100) jusqu'au côté externe (300) opposé de la membrane (100), un diamètre moyen des canaux de diffusion (120) sur le côté externe (300) étant au moins 3 fois supérieur à un diamètre moyen des canaux de diffusion (120) sur le côté interne (200) de la membrane (100) ; et
(ii) les surfaces des côtés interne et externe (200, 300) de la membrane (100) et une surface interne des canaux de diffusion (120) de la membrane (100) étant hydrophobes, de sorte qu'un angle de contact d'une goutte d'eau posée dessus est de 90° ou plus.

2. Séparateur de CO₂ selon la revendication 1, sur lequel l'angle de contact sur le côté interne (200) de la membrane (100) est d'au moins 130° et l'angle de contact sur le côté externe (300) de la membrane (100) est d'au moins 135°.

3. Séparateur de CO₂ selon la revendication 2, sur lequel l'angle de contact (304) sur le côté externe (300) est supérieur de 1° à 10° à l'angle de contact (204) sur le côté interne (200) de la membrane (100).

4. Séparateur de CO₂ selon l'une quelconque des revendications 1 à 3, sur lequel la membrane (100) est constituée de deux couches présentant un diamètre moyen différent des canaux de diffusion (120).

5. Séparateur de CO₂ selon l'une quelconque des revendications 1 à 4, sur lequel la membrane (100) est fixée dans un cadre (310), dont la surface est hydrophobe.

6. Séparateur de CO₂ selon l'une quelconque des revendications 1 à 4, sur lequel le cadre (310) est à base d'un matériau hydrophile poreux.

7. Séparateur de CO₂ selon la revendication 6, sur lequel est disposé, entre la membrane (100) et le cadre (310) un revêtement ou une couche intermédiaire (311) qui est à base d'un matériau hydrophobe.
